# EUROPEAN PATENT APPLICATION

(11) **EP 4 002 122 A1**
(43) Date of publication of application: **25.05.2022**
(21) Application number: 20207824.2
(22) Date of filing: 16.11.2020
(51) Int. Cl.: G06F 11/07, G06F 21/57, G06F 21/55

(54) **VEHICLE NETWORK FOR MANAGING A BOOT INTEGRITY FAILURE**

(71) Applicant: Valeo Comfort and Driving Assistance, 94046 Créteil Cedex (FR)
(72) Inventor: PITCHAIMANI, Ramakrishnan, 94046 Créteil CEDEX (FR)
(74) Representative: Delaval, Guillaume Laurent

(57) **Abstract**

The invention relates to a vehicle network for managing a boot integrity failure, comprising:
- a central communication unit,
- a plurality of domains comprising one or a plurality of electronic control units, each electronic control unit being configured to execute a secure boot process,
- said central communication unit being configured to communicate with each electronic control unit via a primary communication channel,

Wherein said vehicle network further comprises:
- a vehicle integrity supervisor,
- a local integrity supervisor within some electronic control units,
- a secondary communication channel between each local integrity supervisor and the vehicle integrity supervisor,
- said local integrity supervisors being further configured to send a failure log to the vehicle integrity supervisor via the secondary communication channel when there is a boot integrity failure,
- said vehicle integrity supervisor being further configured to send back to said local integrity supervisors via said secondary communication channel an acknowledgment and/or an appropriate countermeasure command regarding said failure log,
- said local integrity supervisor being further configured to enforce said appropriate countermeasure command.

## Description

### FIELD OF THE INVENTION

The present invention relates to a vehicle network for managing a boot integrity failure. It also relates to a method for managing a boot integrity failure within a vehicle network. Such a vehicle network may be used, but not exclusively, in a motor vehicle.

### BACKGROUND OF THE INVENTION

A vehicle network for managing a boot integrity failure, well-known by the man skilled in the art, comprises:
- a central communication unit,
- a plurality of domains comprising a plurality of electronic control units, each electronic control unit being configured to execute a secure boot process,
- said central communication unit being configured to communicate with each electronic control unit via a primary communication channel.

One drawback of this prior art is that when there is a boot integrity failure, an electronic control unit cannot send back the type of boot integrity failure to the central communication unit via said primary communication channel as the electronic control unit may be corrupted with some malicious code within, and thus the primary communication channel is open to attackers who are able to send back some malicious data.

### SUMMARY OF THE INVENTION

It is an object of the invention to provide a vehicle network for managing a boot integrity failure, which resolves the problem above-stated.

To this end, it is provided a vehicle network for managing a boot integrity failure, comprising:
- a central communication unit,
- a plurality of domains comprising one or a plurality of electronic control units, each electronic control unit being configured to execute a secure boot process,
- said central communication unit being configured to communicate with each electronic control unit via a primary communication channel,

Wherein said vehicle network further comprises:
- a vehicle integrity supervisor,
- a local integrity supervisor within some electronic control units,
- a secondary communication channel between each local integrity supervisor and the vehicle integrity supervisor,
- said local integrity supervisors being further configured to send a failure log to the vehicle integrity supervisor via the secondary communication channel when there is a boot integrity failure,
- said vehicle integrity supervisor being further configured to send back to said local integrity supervisors via said secondary communication channel an acknowledgment and/or an appropriate countermeasure command regarding said failure log,
- said local integrity supervisor being further configured to enforce said appropriate countermeasure command.

As we will see in further details, the secondary communication channel guarantee the isolation of the affected electronic control unit and also allows the local integrity supervisor of said electronic control unit to communicate with the vehicle integrity supervisor on intrusion detection events and in particular on the type of boot integrity failure. Thus, appropriated countermeasures may be applied when necessary and sent back via the secondary communication channel.

According to non-limitative embodiments of the invention, the vehicle network for managing a boot integrity failure in accordance with the invention further comprises the following characteristics.

In a non-limitative embodiment, said appropriate countermeasure command is an update of the electronic control unit.

In a non-limitative embodiment, said vehicle integrity supervisor is centralized or a distributed.

In a non-limitative embodiment, said vehicle integrity supervisor is part of the central communication unit or is part of a main domain electronic controller of each domain.

In a non-limitative embodiment, said vehicle integrity supervisor is composed of instructions stored in a one-time programmable read-only memory, and said local integrity supervisors are composed of instructions stored in a one-time programmable read-only memory.

In a non-limitative embodiment, said secondary communication channel is disabled by default.

In a non-limitative embodiment, a local integrity supervisor is further configured to enable said secondary communication channel when there is a boot integrity failure.

In a non-limitative embodiment, an electronic control unit is isolated from the vehicle network when there is a boot integrity failure.

In a non-limitative embodiment, the local integrity supervisors are further configured to communicate to the vehicle integrity supervisor via said secondary communication channels any other detected intrusion events.

In a non-limitative embodiment, the communication between the local integrity supervisors and vehicle integrity supervisor are secured against spoofing, tampering and information disclosure.

In a non-limitative embodiment, the domains of the vehicle network comprise a power train domain, a chassis control domain and an ADAS domain.

In a non-limitative embodiment, the domains of the vehicle network further comprise a domain body electronics domain.

There is also provided a method for managing a boot integrity failure within a vehicle network, said vehicle network comprising a central communication unit, a plurality of domains comprising one or a plurality of electronic control units, each electronic control unit being configured to execute a secure boot process, said central communication unit being configured to communicate with each electronic control unit via a primary communication channel, wherein some electronic control units comprise a local integrity supervisor, said method comprising:
- sending by said local integrity supervisor(s) a failure log to the vehicle integrity supervisor via a secondary communication channel when there is a boot integrity failure,
- sending back by said vehicle integrity supervisor to said local integrity supervisor(s) via said secondary communication channel an acknowledgment and/or an appropriate countermeasure command regarding said failure log,
- enforcing by said local integrity supervisor(s) said appropriate countermeasure command when it exists.

In a non-limitative embodiment, said method further comprises enabling said secondary communication channel when there is a boot integrity failure.

### BRIEF DESCRIPTION OF THE FIGURES

Some embodiments of methods and/or apparatus in accordance with embodiments of the present invention are now described, by way of example only, and with reference to the accompanying drawings, in which:
- Figure 1 is a schematic view of a vehicle network for managing a boot integrity failure, said vehicle network comprising a central communication unit with a vehicle integrity supervisor, a plurality of domains comprising a plurality of electronic control units, and a local integrity supervisor within some electronic control units, according to a non-limitative embodiment of the invention,
- Figure 2 illustrates functions executed by the vehicle integrity supervisor, by the local integrity supervisors and by the electronic control units of the vehicle network of figure 1, according to a non-limitative embodiment,
- Figure 3 illustrates storage memories where the vehicle integrity supervisor of figure 2 is stored,
- Figure 4 illustrates storage memories where the local integrity supervisors of figure 2 are stored,
- Figure 5 is a flowchart of a method for managing a boot integrity failure which is carried out by the vehicle network of figure 1, according to a non-limitative embodiment,
- Figure 6 is a flowchart further illustrating a step of the method of figure 1, said step enabling the secondary communication channel of said vehicle network of said figure 1, according to a non-limitative embodiment.

### DESCRIPTION OF EMBODIMENTS OF THE INVENTION

In the following description, well-known functions or constructions by the man skilled in the art are not described in detail since they would obscure the invention in unnecessary detail.

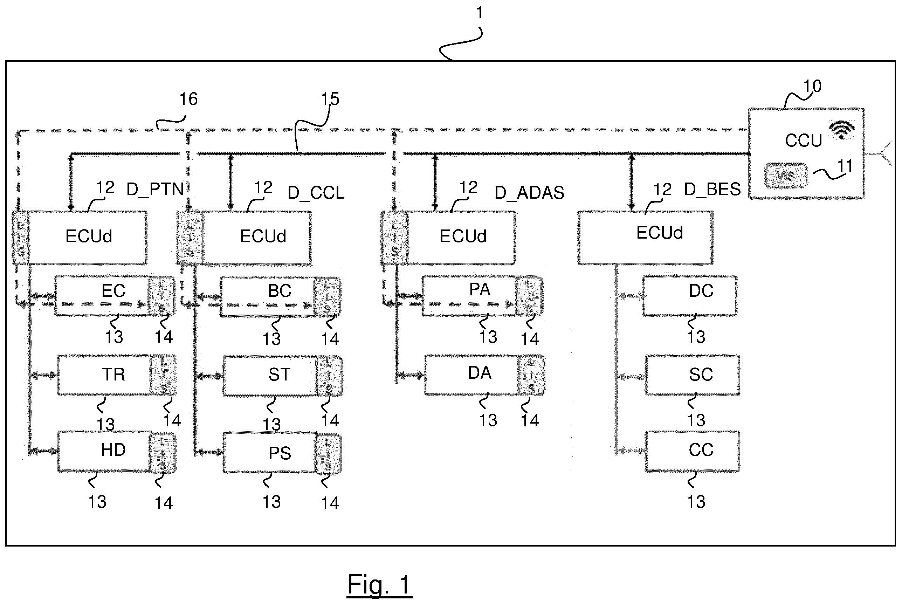

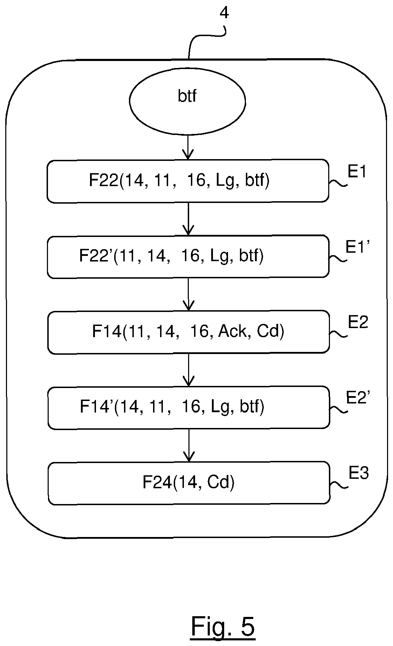

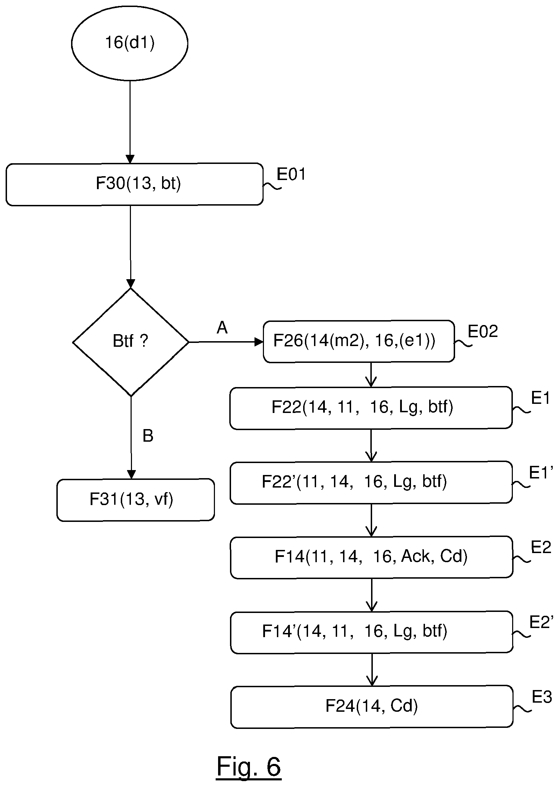

The present invention relates to a vehicle network 1 for managing a boot integrity failure illustrated in figures 1 to 4, according to non-limitative embodiments. It also relates to a method 4 for managing a boot integrity failure illustrated in figures 5 and 6. Said vehicle network 1 may be used in a vehicle. In a non-limitative embodiment, said vehicle is an automobile vehicle. In non-limitative examples, said automobile vehicle is a motor vehicle, or an electrical vehicle or a hybrid vehicle.

As illustrated in the figure 1, the vehicle network 1 comprises:
- a central communication unit 10,
- a vehicle integrity supervisor 11,
- a plurality of domains 12 comprising a plurality of electronic control units 13, and
- local integrity supervisors 14.

The vehicle network 1 comprises a primary communication channel 15 for each electronic control unit 13 and a secondary communication channel 16 for each electronic control unit 13. In figure 1, for purpose of clarity, all the primary communication channels 15 have not been drawn, and all the secondary communication channels 16 have not been drawn.

These elements are described in detailed hereinafter.

In the following, the central communication unit 10 is also referred as CCU, the vehicle integrity supervisor 11 is also referred as VIS, an electronic control unit 13 is also referred as ECU, and a local integrity supervisor 14 is also referred as LIS.

### • Primary communication channel 15

The primary communication channel 15 is used for the communication between said central communication unit 10 and said electronic control units 13, in particular, for exchanging messages msg. These messages msg are in non-limitative examples update messages to update the ECU software, reset messages to reset the ECU, remote execution messages to execute vehicle functions vf, remote diagnostic messages to execute diagnostic function etc...

When using the primary communication channel 15, the ECUs are operating in a normal mode m1.

In non-limitative embodiments, the primary communication channel 15 is a CAN bus or a LIN bus.

### • Secondary communication channel 16

The secondary communication channel 16 is a parallel and highly secured dedicated communication channel used for communicating the boot integrity failure btf from the local integrity supervisors 14 to the vehicle integrity supervisor 11 and to get back the response from the VIS in order to recover from the boot integrity failure btf, also called booting integrity failure.

The secondary communication channel 16 is secured so that an attacker cannot perform false triggers like resetting an ECU, false updates, read critical confidential data etc. In particular, the secondary communication channel 16 is secured against the following threats.
- against malicious data sent by an attacker to an ECU and thereby to the vehicle network 1,
- against malicious commands sent by an attacker to an ECU or to the VIS to perform malicious activities,
- against the replay of critical commands (such as in non-limitative examples remote diagnostic and software update) by an attacker to perform malicious activities,
- against tampering critical commands by an attacker to perform malicious activities,
- against reading by an attacker critical data sent,
- against sending by an attacker messages to perform DOS attacks such as in a non-limitative example forcing an ECU to software update mode.

In other words, the communication between an LIS and the VIS guarantees authenticity, confidentiality and integrity. Hence, a local integrity supervisor 14 and the vehicle integrity supervisor 11 (described in the following) are secured against spoofing, tampering and information disclosure.

When using the primary communication channel 15, the ECU are operating in a secure mode m2.

In non-limitative embodiments, the secondary communication channel 16 is a CAN bus, a LIN bus, an Ethernet link, or a SPA bus.

### • Central communication unit 10

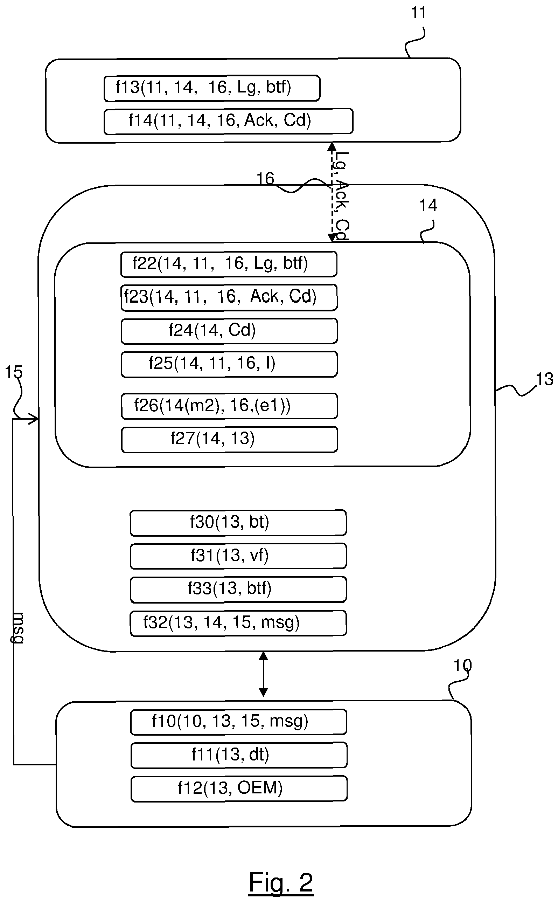

The central communication unit 10 is configured to communicate with a distant unit (not illustrated), such as in non-limitative examples a distant server or a Smartphone. It allows the network vehicle 1 to communicate with such distant units and to send some information dt to said distant units such as vehicle data (speed, location, etc), diagnostic data etc. (function illustrated in figure 2 f11(10, dt)).

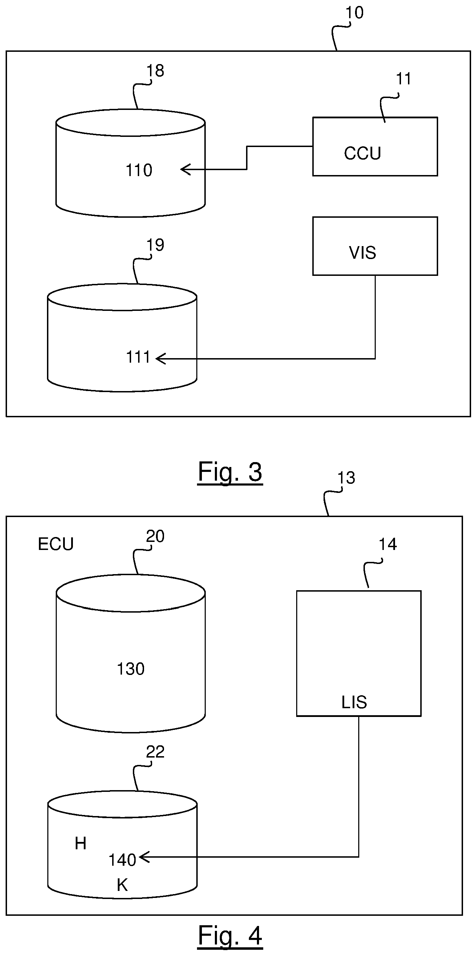

As illustrated in figure 3, the CCU comprises primary instructions referred as instructions 110.

The central communication unit 10 is configured to communicate with each electronic control unit 13 of each domain 12 via the first communication channel 15 as mentioned above (function illustrated in figure 2 f10(10, 13, 15, msg)).

For this purpose, as illustrated in figure 3, the CCU is configured to execute instructions 110 to perform the exchange of messages msg.

The instructions 110 also called program instructions 110, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

The instructions 110 are stored in a memory 18. Hence, the memory 18 is a non-transitory computer readable storage medium comprising instructions 110 which when executed by the CCU, causes the CCU to carry out the function f10.

The memory 18 is also referred to as non-transitory computer readable storage medium 18, a computer readable storage medium 18, a computer readable storage device 18, or a storage memory 18. The memory 18 is an erasable programmable read-only memory EPROM or the like such as EEPROM, a Flash memory etc.

### • Domains 12

In a non-limitative embodiment illustrated in figure 1, the domains 12 comprise a power train domain (referred as D_PTN in figure 1), a chassis control domain (referred as D_CCL in figure 1) and an advanced driver-assistance system domain also called ADAS domain (referred as D_ADAS in figure 1). In a non-limitative embodiment, the domains 12 further comprise a body electronics domain (referred as D_BES in figure 1).

Each domain 12 comprises one or a plurality of electronic control units 13 for controlling a vehicle function vf of the vehicle. Hence, in a non-limitative embodiment, the power train domain D_PTN comprises an engine control's ECU (illustrated EC in figure 1) for controlling the power train of the vehicle, a transmission's ECU (illustrated TR in figure 1) for controlling the transmission of the vehicle, an hybrid drive's ECU (illustrated HD in figure 1). In a non-limitative example, a hybrid drive's ECU is controlling the speed (acceleration/deceleration) of the vehicle.

In a non-limitative embodiment, the chassis control domain D_CCL comprises a brake control's ECU (illustrated BC in figure 1) for controlling the brakes of the vehicle, a steering control's ECU (illustrated ST in figure 1) for controlling the steering of the vehicle, a passive safety's ECU (illustrated PS in figure 1). In a non-limitative example, a passive safety's ECU is controlling the air bags. In a non-limitative embodiment, the ADAS domain D_ADAS comprises a park assist's ECU (illustrated PA in figure 1), a driver assist's ECU (illustrated DA in figure 1).

In a non-limitative embodiment, the body electronics domain D_BES comprises a door control's ECU (illustrated DC in figure 1)) for controlling the doors of the vehicle, a seat control's ECU (illustrated SC in figure 1)) for controlling the seats of the vehicle, and a climate control's ECU) for controlling the HVAC (Heat/Ventilation and/or Conditioning) of the vehicle (illustrated CC in figure 1).

Each domain 12 further comprises a main domain electronic controller ECUd that manages the security aspects of its ECUs such as secure communication, firewall, secure software updates, secure storage, access control etc..... As it is well-known by the man skilled in the art, it is not described here.

### • Vehicle integrity supervisor 11

The vehicle integrity supervisor 11 is a security component which is responsible for handling the vehicle level security events such as in non-limitative examples software update failures, secured communication failures, boot integrity failure btf.

The VIS is configured to communicate to the stakeholders (OEM security servers) the intrusion logs periodically or on demand (including the failure log Lg sent by the LIS described in the following) (function illustrated in figure 2 f12(10, 11, OEM)).

In non-limitative embodiments, the VIS is centralized or distributed. When centralized, the VIS is integrated within the CCU. When distributed, the VIS is integrated within each main domain electronic controller ECUd of each domain 12. In the non-limitative example of figure 1, the CCU comprises the VIS. Hence, the vehicle integrity supervisor 11 is part of the central communication unit 10 or is part of a main domain electronic controller ECUd of each domain 12.

As described in the following, the vehicle integrity supervisor 11 is composed of secondary instructions referred as instructions 111 (illustrated in figure 3) within a read-only memory ROM.

Hence, when the CCU comprises the VIS, the CCU is split between an EPROM or the like for the communication with the different ECU via the primary communication channel 15, and a ROM, in particular for the communication with the different LIS via the secondary communication channel 16.

The vehicle integrity supervisor 11 is configured to receive from the local integrity supervisors 14 a failure log Lg via the secondary communication channel 16, where there is a boot integrity failure btf, that is to say when an electronic control unit 13 fails to execute a secure boot process (function illustrated in figure 2 f13(11, 14, 16, Lg, btf)).

In non-limitative embodiments, the failure log Lg comprises log labels indicated that:
- the ECU is affected, that is to say is corrupted,
- a pre-shared secret is compromised,
- diagnostics data are corrupted.

When there is a boot integrity failure btf, it means that there is a part of the instructions 130 (illustrated in figure 4) within the ECU that have been corrupted by an attacker, said corrupted instructions being also called malicious software. With the malicious software, an attacker can transmit some messages to the CCU such as malicious commands for the different vehicle functions vf causing the vehicle to act wrongfully. In non-limitative examples, the malicious commands are some malicious breaking commands, malicious transmission command, malicious speed command etc. Therefore, the cyber-security of the vehicle may be in jeopardy, hence the safety of its passengers.

When there is a boot integrity failure btf, said ECU stops its own execution. It is to be noted that as the ECU is already corrupted, it cannot send back itself a failure log Lg via the primary communication channel 15.

Then, the vehicle integrity supervisor 11 is further configured to send back to said local integrity supervisors 14 via said secondary communication channel 16 an acknowledgment Ack and/or an appropriate countermeasure command Cd regarding said failure log Lg (function illustrated in figure 2 f14(11, 14, 16, Ack, Cd)).

The acknowledgment Ack allows the vehicle integrity supervisor 11 to warn the local integrity supervisors 14 that it acknowledges the boot integrity failure btf but nothing is to be done.

In non-limitative embodiments, an appropriate counter measure command Cd is an update of the electronic control unit 13, in particular the update of the malicious software within said electronic control unit 1 with some right software, that is to say the corrupted instructions 130 are replaced by some rightful instructions 130.

For this purpose, the instructions 111 which composed the VIS perform the receiving of the failure log Lg and the sending of the acknowledgment Ack and/or the appropriate countermeasure command Cd via the secondary communication channel 16.

The instructions 111 also called program instructions 111, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

The instructions 111 are stored in a memory 19. The memory 19 is a non-transitory computer readable storage medium comprising instructions 111 which when executed by a CCU or a main domain electronic controller ECUd, causes the CCU or a main domain electronic controller ECUd to carry out the functions f13 and f14.

The memory 19 is also referred to as non-transitory computer readable storage medium 19, a computer readable storage medium 19, or a computer readable storage device 19, or a storage memory 19.

The memory 19 is a read-only memory ROM. The fact that the memory 19 is a read-only memory ROM means that it cannot be corrupted by an attacker. Hence the instructions 111 for a communication of information regarding the boot integrity failure btf between the VIS and the different LIS cannot be corrupted.

### • Electronic control unit 13

In a non-limitative embodiment, an electronic control unit 13 is a microcontroller.

In another non-limitative embodiment, en electronic control unit 13 is a processor. In non-limitative variants of embodiment, the processor is a central processing unit (CPU), a graphics processing unit (GPU), a digital signal processor (DSP), an application specific integrated circuit (ASICs), a radiofrequency integrated circuits (RFICs), a reduced instruction set computing processor (RISC), a complex instruction set computing processor (CISC), or any suitable combination thereof.

Each electronic control unit 13 is configured to execute a secure boot process bt (function illustrated in figure 2 f30(13, bt)), and the vehicle function vf for which it is dedicated to (function illustrated in figure 2 f31(13, vf)) using the first communication channel 15. It is to be noted that when the electronic control unit 13 is powered on, the secure boot process bt will start automatically.

Each electronic control unit 13 is further configured to communicate with the CCU via the primary communication channel 15 for exchanging the messages msg above-mentioned (function illustrated in figure 2 f32(13, 10, 15, msg)).

For this purpose, as illustrated in figure 4, each electronic control unit 13 comprises a memory 20 (when it is a microcontroller) or cooperate with said memory 20 (when it is a processor), and is configured to execute instructions 130 to perform the functions f30, f31 and f32.

The instructions 130 also called program instructions 130, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

The instructions 130 are stored in said memory 20. The memory 20 is a non-transitory computer readable storage medium comprising instructions 130 which when executed by an ECU, causes the ECU to carry out the secure boot process bt and said vehicle function vf.

The memory 20 is also referred to as non-transitory computer readable storage medium 20, a computer readable storage medium 20, a computer readable storage device 20, or a storage memory 20. The memory 20 is an erasable programmable read-only memory EPROM or the like such as EEPROM, a Flash memory etc.

Some of the electronic control units 13 comprise a local integrity supervisor 14. Only the ones whose domain 12 can affect the cyber-security aspects of the vehicle comprise a LIS. Hence, it depends on whether the particular ECU is exposed to some security threats.

In the non-limitative example illustrated in figure 1, the ECU of the power train domain D_PTN, the chassis control D_CCL, the ADAS domain D_ADAS comprises a LIS. In this non-limitative example, the ECU of the body electronics domain D_BES don't comprise any LIS because in this case, the D_BES doesn't impact the cyber-security of the vehicle. Of course, if the body electronics domain D_BES impacts the cyber-security of the vehicle, its ECU will each have a LIS within. In a non-limitative example, the body electronics domain D_BES may impact the cyber-security aspects of the vehicle when there is a remote door opening via a Smartphone. A malicious command could be send to open the door when the vehicle is on move.

When there is a boot integrity failure btf, each ECU is further configured to stop its own execution (function illustrated in figure 2 f33(13, btf)) using the first communication channel 15.

Furthermore, when there is a boot integrity failure btf, the affected ECU is isolated from the vehicle network 1, that is to say the it cannot communicates anymore with the CCU or any other elements of the vehicle network 1 via the primary communication channel 15. It prevents the affected ECU from accessing the primary communication channel 15.

### • Local integrity supervisor 14

As described hereinafter, a local integrity supervisor 14 comprises secondary instructions referred as instructions 140 within a one-time programmable read-only memory ROM.

Hence, an ECU is split between an EPROM or the like in particular for the communication with the CCU via the primary communication channel 15, and a ROM for the communication with the VIS via the secondary communication channel 16.

The counterpart of the vehicle integrity supervisor 11 is integrated in the ECUs' locally as part of a secure boot process in order to handle the secure communication of the boot integrity failure btf to the vehicle integrity supervisor 11. The secure boot process is the process to verify the integrity of the software of the ECU before giving the control to it. It is the process of boot integrity validation during the bootup.To this end, the secondary communication channel 16 is used. It is a dedicated communication channel used for a secure communication of the boot integrity failure btf. The secure boot process itself is not described here as it is well-known by the man skilled in the art.

Hence, each local integrity supervisor 14 is configured to send a failure log Lg to the vehicle integrity supervisor 11 via the secondary communication channel 16 when there is a boot integrity failure btf (function illustrated in figure 2 f22(14, 11, 16, Lg, btf)), that is to say when the ECU is not able to boot correctly.

Moreover, each local integrity supervisor 14 is further configured to receive from the vehicle integrity supervisor 11 via said secondary communication channel 16 an acknowledgment Ack and/or an appropriate countermeasure command Cd regarding said failure log Lg (function illustrated in figure 2 f23(14, 11, 16, Ack, Cd)).

Finally, each local integrity supervisor 14 is further configured to enforce the appropriate countermeasure command Cd, when it exists, that is to say when the ECU receives it (function illustrated in figure 2 f24(14, Cd)).

For this purpose, as illustrated in figure 4, the instructions 140 which composed an LIS perform the sending of the failure log Lg and the receiving of the acknowledgment Ack and/or the appropriate countermeasure command Cd via the secondary communication channel 16, and the enforcement of the appropriate countermeasure command Cd.

The instructions 140 also called program instructions 140, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.

The instructions 140 are stored in a memory 22. The memory 22 is a non-transitory computer readable storage medium comprising instructions 140 which when executed by a LIS, causes the LIS to carry out the functions f22 to f24, and f25, f26 and f27 described in the following.

The memory 22 is also referred to as non-transitory computer readable storage medium 22, a computer readable storage medium 20, a computer readable storage device 22, or a storage memory.

The memory 22 is a one-time programmable read-only memory ROM. The fact that the memory 22 is a read-only memory ROM means that it cannot be corrupted by an attacker. Hence the instructions 140 for the secure communication of the boot integrity failure btf between a LIS and the VIS cannot be corrupted.

Hence, in practical, when there is a boot integrity failure btf, the instructions 140 within the read-only memory ROM are executed. When there is no boot integrity failure btf, the instructions 140 within the read-only memory ROM are not executed. In other words, there is no call of the part of this software within the ECU that is composed of these instructions 140. In other words, when the secure boot process bt succeeds, the instructions 130 are executed.

Hence, the exchange of the failure log Lg between a LIS and the VIS and the response back of the VIS (acknowledgment Ack and/or appropriate countermeasure command Cd) is controlled by a trusted software (that is to say the instructions 111 and the instructions 140) coming from some the one-time programmable read-only memories ROM (referenced 19 in figure 3 and 22 in figure 4). Hence, the secondary communication channel 16 is controlled by trusted software.

The boot integrity failure btf means that there is an intrusion of an attacker and that the affected ECU is corrupted, that is to say it has been maliciously updated or tampered. There may be other detected intrusion events such as in non-limitative examples firewall violations, access control violations, malicious commands and data, invalid software.

Hence, in a non-limitative embodiment, the local integrity supervisors 14 are further configured to communicate to the vehicle integrity supervisor 11 via said secondary communication channels 16 any other detected intrusions I (function illustrated in figure 2 f25(14, 11, 16, I)).

In non-limitative embodiments, the local integrity supervisor 14 and vehicle integrity supervisor 11 are secured against spoofing, tampering and information disclosure. In other words, the communication via the secondary communication channel 16 between the different LIS and the VIS guarantees authenticity, confidentiality and integrity.

In order to guarantee the authenticity and integrity of the communication between the LIS of an affected ECU and the VIS via the secondary communication channel 16, in a non-limitative embodiment, a hash function H is used for the transmitted messages between the LIS and the VIS via the secondary communication channel 16. The hash function H is stored in the one-time programmable read only memory ROM (referenced 22 in figure 4). In other non-limitative embodiments, an algorithm using a HMAC (Hash Based MAC is be used.

In order to ensure the confidentiality against the man in the middle attack, in a non-limitative embodiment, the communication between the LIS of an affected ECU and the VIS via the secondary communication channel 16 is encrypted with a pre-shared secret K between the LIS and the VIS. In a non-limitative example, the AES (Advances Encryption Standard) algorithm is used. The pre-shared secret K is stored in the one-time programmable read-only memories ROM (referenced 19 in figure 3 and 22 in figure 4) so that is cannot be corrupted as illustrated in figure 3 and figure 4.

In order to prevent replay attacks, in non-limitative embodiments, a monotonic counter or a time stamp is appended to the messages (acknowledgment Ack and/or appropriate countermeasure command Cd) via the secondary communication channel 16 sent between the LIS of an affected ECU and the VIS. It is to be reminded that a monotonic counter is a counter which can only be incremented and never be decremented.

All these secured measures being known by the man skilled in the art, they are not described in details here.

In order to prevent an attacker to connect to the secondary communication channel 16 (which is called a DOS attack), in a non-limitative embodiment, the secondary communication channel 16 is disabled by default (referred as disable mode d1 illustrated in figure 6), that is to say initially disabled. It means that the communication port used for the secondary communication channel 16 is deactivated by default. It means that the electronic control units ECU are initially disconnected from their corresponding secondary communication channels 16. That means they are disconnected by default. Hence, an attacker cannot make a point to point connection. Hence, an attacker cannot send any malicious message via said secondary communication channel 16 when there is no boot integrity failure btf.

When there is a boot integrity failure btf, the secondary communication channel 16 is enabled (referred as enable mode e1 illustrated in figure 6). It means that the communication port used for the secondary communication channel 16 is activated.

Hence, the local integrity supervisors 14 are further configured to enable said secondary communication channel 16 when there is a boot integrity failure btf of their corresponding ECU (function illustrated in figure 2 f26(14(m2), 16(e1))).

Hence, when the ECU is operating in a normal mode m1, the secondary communication channel 16 is disabled, whereas when the ECU is operating in a secured mode m2 via its LIS, the secondary communication channel 16 is enabled. Hence, the secondary communication channel 16 is enabled by the LIS only when required.

As mentioned above, when there is a boot integrity failure btf, the affected ECU is isolated from the vehicle network 1. This function illustrated f27(14, 13) in figure 4 is performed by the local integrity supervisor 14.

In conclusion, the vehicle network 1 provides a way to securely communicate the boot integrity failure btf and to securely recover from the boot integrity failure through secured updates.

The vehicle network 1 is configured to carry out a method 4 for managing a boot integrity failure btf. Said method 4 is illustrated in figures 5 and 6. The non-limitative embodiment hereinafter describes the execution of the secure boot process bt by one ECU. OF course, it applies for each ECU that executes a secure boot process bt.

As illustrated in figure 5, the method 4 comprises the following steps:
When an ECU executes a secure boot process bt and when it fails, there is a boot integrity failure btf.

In step E1) illustrated F22(14, 11, 16, Lg, btf), the local integrity supervisor 14 of the ECU sends a failure log Lg to the vehicle integrity supervisor 11 via the secondary communication channel 16 when there is a boot integrity failure btf. As mentioned before, the vehicle network 1 comprises a plurality of secondary communication channel 16, one between each LIS and VIS. It is to be noted that only the LIS whose ECU fails to execute the secure boot process bt sends said failure log Lg. In step E1'), the VIS receives said failure log(s) Ld from said local integrity supervisor 14 (step illustrated F22'(11, 14, 16, Lg, btf)).

In step E2) illustrated F14(11, 14, 16, Ack, Cd), said vehicle integrity supervisor 11 sends back to said local integrity supervisor 14 via said secondary communication channel 16 an acknowledgment Ack and/or an appropriate countermeasure command Cd regarding said failure log. In step E2'), the LIS receives said acknowledgment Ack and/or an appropriate countermeasure command Cd from said VIS (step illustrated F14'(14, 11, 16, Ack, Cd)).

In step E3) illustrated F24(14, Cd), the local integrity supervisor 14 enforces said appropriate countermeasure command Cd when there is such an appropriate countermeasure command Cd, that is to say when it exists.

As the secondary communication channel 16 is disabled by default (referred as disable mode d1 illustrated in figure 6) as mentioned before, in a non-limitative embodiment, the method 4 further comprises a step E02) of enabling said secondary communication channel 16 when there is a boot integrity failure btf (branch A illustrated in figure 6 and function illustrated in figure 6 F26(14(m2), 16(e1))). The secondary communication channel 16 is set up to the enable mode e1. Then, the steps E1 to E3 described above are executed.

It is to be noted that the initial step of secure boot process bt is illustrated in figure 6 (step E0) illustrated F30(13, bt)).

It is to be noted that when there is no boot integrity failure btf, the secondary communication channel 16 between the LIS and the VIS (in other words between the ECU and the VIS) stayed disabled and then after the secure boot process success, the ECU can executes the vehicle function vf (branch B illustrated in figure 6 and function F31 (13, vf) illustrated in figure 6).

It is to be understood that the present invention is not limited to the aforementioned embodiments and variations and modifications may be made without departing from the scope of the invention.

Hence, some embodiments of the invention may comprise one or a plurality of the following advantages:
- it allows the communication of the type of boot integrity failure btf from an affected electronic control unit(s) 13 (in particular from its corresponding local integrity supervisor 14) to the vehicle integrity supervisor 11 via a dedicated parallel communication channel and to get back a response in order to recover from the boot integrity failure btf. Hence, it allows an affected electronic control unit 13 to securely communicate with the central communication unit 10 or with the main domain electronic controller ECUd of the domain 12 it belongs to.
- it allows the communication of any other detected intrusion events I,
- it avoids an attacker to send malicious data to the vehicle network 1 from the affected electronic control unit(s) 13.
- it gives a robust communication between a local integrity supervisor 14 of an electronic control unit 13 and the vehicle integrity supervisor 11 against attacks such as the man in the middle attack,
- the use of the secondary communication channel 16, allows the isolation the electronic control unit(s) 13 from the vehicle network 1.

## Claims

1. Vehicle network (1) for managing a boot integrity failure (btf), comprising:
- a central communication unit (10),
- a plurality of domains (12) comprising one or a plurality of electronic control units (13), each electronic control unit (13) being configured to execute a secure boot process (bt),
- said central communication unit (10) being configured to communicate with each electronic control unit (13) via a primary communication channel (15),
Wherein said vehicle network (1) further comprises:
- a vehicle integrity supervisor (11),
- a local integrity supervisor (14) within some electronic control units (13),
- a secondary communication channel (16) between each local integrity supervisor (14) and the vehicle integrity supervisor (11),
- said local integrity supervisors (14) being further configured to send a failure log (Lg) to the vehicle integrity supervisor (11) via the secondary communication channel (16) when there is a boot integrity failure (btf),
- said vehicle integrity supervisor (11) being further configured to send back to said local integrity supervisors (14) via said secondary communication channel (16) an acknowledgment (Ack) and/or an appropriate countermeasure command (Cd) regarding said failure log (Lg),
- said local integrity supervisor (14) being further configured to enforce said appropriate countermeasure command (Cd).

2. Vehicle network (1) according to claim 1, wherein said appropriate countermeasure command (Cd) is an update of the electronic control unit (13).

3. Vehicle network (1) according to any preceding claims, wherein said vehicle integrity supervisor (11) is part of the central communication unit (10) or is part of a main domain electronic controller (ECUd) of each domain (12).

4. Vehicle network (1) according to any preceding claims, wherein said vehicle integrity supervisor (11) is composed of instructions (111) stored in a one-time programmable read-only memory (19), and said local integrity supervisors (14) are composed of instructions (140) stored in a one-time programmable read-only memory (22).

5. Vehicle network (1) according to any preceding claims, wherein said secondary communication channel (16) is disabled by default.

6. Vehicle network (1) according to any preceding claims, wherein a local integrity supervisor (14) is further configured to enable said secondary communication channel (16) when there is a boot integrity failure (btf).

7. Vehicle network (1) according to any preceding claims, wherein an electronic control unit (13) is isolated from the vehicle network (1) when there is a boot integrity failure (btf).

8. Vehicle network (1) according to any preceding claims, wherein the local integrity supervisors (14) are further configured to communicate to the vehicle integrity supervisor (11) via said secondary communication channels (16) any other detected intrusion events (I).

9. Vehicle network (1) according to any preceding claims, wherein the communication between the local integrity supervisors (14) and vehicle integrity supervisor (11) are secured against spoofing, tampering and information disclosure.

10. Vehicle network (1) according to any preceding claims, wherein the domains (12) of the vehicle network (1) comprise a power train domain (D_PTN), a chassis control domain (D_CCL) and an ADAS domain (D_ADAS).

11. Vehicle network (1) according to any preceding claims, wherein the domains (12) of the vehicle network (1) further comprise a domain body electronics domain (D_BES).

12. Method (4) for managing a boot integrity failure (btf) within vehicle network (1), said vehicle network (1) comprising a central communication unit (10), a plurality of domains (12) comprising one or a plurality of electronic control units (13), each electronic control unit (13) being configured to execute a secure boot process (bt), said central communication unit (10) being configured to communicate with each electronic control unit (13) via a primary communication channel (15), wherein some electronic control units (13) comprise a local integrity supervisor (14), said method (4) comprising:
- sending (E1) by said local integrity supervisor(s) (14) a failure log (Lg) to the vehicle integrity supervisor (11) via a secondary communication channel (16) when there is a boot integrity failure (btf),
- sending back (E2) by said vehicle integrity supervisor (11) to said local integrity supervisor(s) (14) via said secondary communication channel (16) an acknowledgment (Ack) and/or an appropriate countermeasure command (Cd) regarding said failure log (Lg),
- enforcing (E3) by said local integrity supervisor(s) (14) said appropriate countermeasure command (Cd) when it exists.

13. Method (4) according to the preceding claim, wherein said method (4) further comprises enabling (E02) said secondary communication channel (16) when there is a boot integrity failure (btf).
